Europäisches Patentamt

European Patent Office

Office européen des brevets

(11) Publication number : **0 480 678 A2**

# (12) EUROPEAN PATENT APPLICATION

(21) Application number : **91309214.4**

(51) Int. Cl.[5] : **C09K 3/14**

(22) Date of filing : **08.10.91**

(30) Priority : **09.10.90 JP 271168/90**

(43) Date of publication of application :
**15.04.92 Bulletin 92/16**

(84) Designated Contracting States :
**BE DE FR GB NL SE**

(71) Applicant : **JAPAN ABRASIVE CO., LTD.**
**90, Ishizukita-machi**
**Sakai Osaka (JP)**

(72) Inventor : **Tamamaki, Masahiro, c/o Japan**
**Abrasive Co. Ltd.**
**90, Ishizukita-machi, Sakai**
**Osaka (JP)**

Inventor : **Onoda, Yoshihiro, c/o Japan**
**Abrasive Co. Ltd.**
**90, Ishizukita-machi, Sakai**
**Osaka (JP)**
Inventor : **Takahashi, Takanobu, c/o Japan**
**Abrasive Co. Ltd.**
**90, Ishizukita-machi, Sakai**
**Osaka (JP)**
Inventor : **Tsuda, Koji, c/o Japan Abrasive Co.**
**Ltd.**
**90, Ishizukita-machi, Sakai**
**Osaka (JP)**

(74) Representative : **Darby, David Thomas et al**
**Abel & Imray Northumberland House 303-306**
**High Holborn**
**London WC1V 7LH (GB)**

(54) Lapping abrasive of aluminazirconia system and method for producing the same.

(57)   Alumina-zirconia lapping abrasives containing at most 30% tetragonal zirconia and optionally containing at least one oxide selected from the group consisting of yttrium oxide, calcium oxide, magnesium oxide, titanium oxide and other rare earth oxides in the form of solid solutions, which are obtainable and preferably obtained by fusing alumina-zirconia abrasive materials, quenching fused materials to obtain an ingot, crushing the ingot and subjecting the crushed ingot to a heat treatment at a higher temperature than the phase transition temperature of zirconia.

EP 0 480 678 A2

This invention relates to a material suitable for use as a lapping abrasive for polishing or lapping various products made from metallic materials, glasses, synthetic resins and so forth, and more particularly to a lapping abrasive suitable for lapping hard memory discs, magnetic heads and photomagnetic discs made from these materials or those with thin-film magnetic coatings, and to a method for producing said lapping abrasives.

Conventional lapping abrasives for general metallic materials, glasses and synthetic resins are aluminum oxides (alundum and white alundum), silicon carbides (carborundum and green carborundum), boron carbides, cerium oxides, chromium oxides, tin oxides, iron oxides, titanium oxides and diamond.

These lapping abrasives are finely crushed and classified into a given grain size and an abrasive composition in a slurry form is prepared for a lapping purpose by adding water thereto.

Recently, lapping abrasives have been used for various purposes such that superior processing characteristics have been required. The general abrasive compositions mentioned above have not attained satisfactory results.

Slurries of conventional lapping abrasives prepared by adding water to the above abrasive materials are likely to cause micro-scratches, pin holes (pits) or orange peels on a lapped surface. Orange peels are caused by a defect of the crystal surface induced by various factors which have not been fully clarified. In order to prevent the occurrence of micro-scratches or orange peels, both a high level of skill and considerable time are required to control grinding factors such as the concentration of abrasive grains in an abrasive composition, grinding time or grinding load. Accordingly, it has been difficult to prevent the occurrence of the above problems for both technical and economic reasons.

Lapping abrasives are generally evaluated by grinding rate, that is, the rate of stock removal in a given time, and by the surface roughness of a finished work. When the grinding rate is higher and the surface roughness is closer to the desired roughness, the lapping abrasive used is regarded as superior.

Grinding rate is improved when abrasive grains of course particle size are used, but the surface roughness becomes coarser. On the other hand, fine abrasive grains can make the surface roughness fine and easily obtain the desired roughness, but the grinding rate is reduced. Therefore workpieces are conventionally lapped to the desired roughness by first using coarse abrasive grains and then using finer grains, the particle size decreasing gradually. In this procedure, however, workpieces have to be rinsed every time the abrasive grains are changed. As a result, much abrasive is lost and the grinding process becomes complicated and takes much time. This is undesirable from the industrial point of view.

There can be found, in the prior art, some abrasive compositions designd to solve the above problems.

Japanese Patent Publication No. 53-3518 provides an abrasive composition comprising water, abrasive grains such as aluminum oxide or cerium oxide, and 0.1 to 15% wt% of acidic compounds such as polyaluminum chloride, aluminum nitrate or aluminum bromide, as grinding accelerator. When this abrasive composition is used for lapping a synthetic resin, the grinding rate is improved and coarse grinding grains are not required. Accordingly a high quality of ground surface is obtained which is free from grinding defects such as scratches and orange peels. There is, however, the drawback that pollution problems are caused by the waste water which includes strong acids such as nitric acid. Moreover, such strong acids rust the grinding machine and metallic jigs and chap the hands of an operator.

Japanese Patent Publication No. 53-44273 provides an abrasive composition for general metal materials comprising silica sol abrasives and an acidic compound such as hydrogen peroxide, sodium peroxide or sodium perborate. Said abrasive composition, however, contains a strong acid and the same problems occur as in the case of the above abrasive composition. Besides, silica sol abrasives are lower in hardness than aluminum oxide abrasives, so that the grinding rate is low.

Japanese patent application laid open under No. 53-41886 proposed to use abrasive grains composed of secondary particles of 1 to 200 $\mu$m which are prepared by bonding primary particles of 0.1 to 0.5 $\mu$m comprising diamond, cubic boron nitride, aluminum oxide and silicon carbide using a binder, whereby a superior grinding rate and a fine ground surface can be obtained.

However, a complicated process is required to granulate and bond the primary particles to form the secondary particles and it takes much time to regulate the particle size uniformly.

Japanese patent application laid open under No. 60-108489 teaches a lapping method suitable for grinding the surface of a magnetic medium layer of a memory hard disc comprising first supplying an aqueous slurry of aluminum oxide powders containing such oxides as sodium hypochlorite between the surface of a magnetic medium layer and a grinding pad which are placed in relative sliding engagement and then supplying a colloidal slurry of aluminum oxide as well as the above aqueous slurry.

Although this two-step method takes much time, the stock removal rate is still not high and the grinding rate is low.

Japanese patent publication No. 64-436 discloses an abrasive composition wherein the above defects are almost solved. Said composition comprises water, aluminum oxide abrasives, i.e. $\alpha$-aluminum oxides obtained

by calcining granular boehmite at 1150°C for 3 hours, and 1 to 20 wt% of nickel sulfate as grinding accelerator. Said composition is neutral or weakly acidic. A plastic surface, electroless nickel plating surface of a memory hard disc, alumite or aluminum surface can be ground mechanochemically by both a mechanical processing with abrasive grains and chemical etching with a processing fluid containing a grinding accelerator. As a result, a superior ground surface and grinding rate can be obtained. The composition, being neutral or weakly acidic, is only weakly oxidizing, so that grinding machines and metal jigs are hardly rusted and the operator's hands are hardly chapped. Said composition, however, contains $\alpha$-aluminum oxides alone as abrasive grains, so that fine primary grains have to be used in order to obtain a given surface roughness, so it does not give satisfactory grinding efficiency.

It is therefore an object of the present invention to provide lapping abrasives and an abrasive composition containing said lapping abrasives whereby the defects and problems of the prior lapping abrasives and abrasive compositions are avoided and solved and high grinding efficiency and high processing quality are obtained.

Another object of the present invention is to provide a method for producing said lapping abrasives.

The present invention is based on the finding that a material suitable for the manufacture of an abrasive giving a high grinding efficiency and desired surface roughness is obtainable, and preferably is obtained, by subjecting alumina-zirconia abrasives to a heat treatment at a temperature higher than the phase transition temperature of zirconia and obtaining alumina-zirconia abrasives containing a residual tetragonal zirconia of 30% or less, based on the total zirconia content of the material.

It is known that alumina-zirconia abrasives containing 10 to 60 wt% zirconia are superior in abrasion resistance and fracture resistance. Alumina and zirconia do not form a solid solution. Rapid cooling of fused alumina-zirconia materials provides a microstructure which has a lot of fine cutting edges. There is then obtained a ground surface of fine roughness. But the alumina-zirconia abrasives are too high in fracture resistance and the usage is limited to heavy duty grinding or rough grinding. In other words, said alumina-zirconia abrasives may only be used as a grinding wheel or coated abrasive article. Besides only coarse grains of No. 8 to 220 mesh size as specified in the Japanese Industrial Standard (JIS R 6111) are used, while the particle size of lapping abrasives is no. 800 to 10000 mesh and average grain size is 15 to 1 $\mu$m. When used for lapping, said alumina-zirconia abrasives can not show a self-sharpening property which is one of the advantageous points therefore because the grinding load is low and the tenacity of grains is too high. Besides, the grinding efficiency is extremely low and many marks are formed on a finished surface. Accordingly, said alumina-zirconia abrasives have not been used for lapping. We have, however, found that abrasive grains suitable for lapping are obtainable, and preferably obtained, by said alumina-zirconia material being subjected to a heat treatment at a temperature higher than the phase transition temperature of zirconia whereby the proportion of tetragonal zirconia is reduced to 30% or less.

The zirconia content of alumina-zirconia abrasives to be used is advantageously 10 to 60 wt% and preferably 35 to 50 wt% which is a near eutectic composition.

The reason why the zirconia content is advantageously 10 to 60 wt% is that within that range an alumina-zirconia eutectic composition with a microstructure can be obtained at a rate of 25 vol% or higher.

10 wt % of zirconia content yields 25 vol% of alumina-zirconia eutectic and 75% vol% of primary alumina crystal. 60 wt% of zirconia content yields 70 vol% of alumina-zirconia eutectic and 30 volt primary zirconia crystal. A higher content of primary alumina or zirconia crystals is not preferred because single crystals of rough crystal structure yield too readily and the alumina-zirconia eutectic with a microstructure is reduced.

It is preferable that at least one oxide selected from the group consisting of yttrium oxide, calcium oxide, magnesium oxide, titanium oxide or other rare earth oxide is contained as stabilizer for zirconia advantageously at a rate of 00.5 to 7 wt% in the total amount thereof.

The addition of 0.05 to 7 wt% of stabilizers increases remarkably the rate of residual tetragonal zirconia in an ingot. In other words, the tetragonal zirconia which may be transformed to the monoclinic zirconia by a heat treatment is increased. The addition of stabilizers higher than 7 wt% yields a cubic zirconia which is hardly transformed and the grain strength becomes higher than that of the monoclinic zirconia to be obtained.

The lapping abrasives in accordance with the present invention are obtainable by, and advantageously are obtained by, fusing and quenching alumina-zirconia abrasive materials to obtain an ingot, subjecting a crushed ingot to a heat treatment at a temperature higher than the transition temperature of zirconia and thereby retaining tetragonal zirconia of 30 wt% or less.

The ingot obtained by fusing the alumina-zirconia abrasive materials in an electric arc furnace and cooled rapidly in accordance with the cooling method disclosed in the Japanese Patent Publication No. 1-48219 (U.S. Patent No. 4,671,917) includes 30 to 80 wt% of residual tetragonal zirconia in the absence of stabilizers and 70 to 100 wt% in the presence of stabilizers.

When the cooling rate is not sufficient, the proportion of residual tetragonal zirconia becomes lower and primary zirconia or alumina crystals precipitate abundantly and besides the crystal size of zirconia and alumina in the eutectic composition becomes larger than 1 μm.

The ingot is crushed into particles having a maximum particle size of 100 μm or below using a crushing device such as ball mill, vibro mill or atrita mill and thereafter particles are classified so that an average grain size of 0.5 to 50 μm is obtained. The proportion of residual tetragonal zirconia is reduced to 50% by the influence of mechanical impact given by the crushing device. The crushed materials, however, are not usable for lapping because the grain strength is still too high. Said crushed materials are then annealed in an annealing furnace at a temperature higher than the transition temperature of zirconia, preferably at 650°C ± 50°C, whereby alumina-zirconia lapping abrasives having a residual tetragonal zirconia of 30 wt% or below are obtained.

Pure zirconia has phase transition points of about 1100°C at rising temperature and about 900°C at falling temperature; in the latter case the tetragonal zirconia is transformed to the monoclinic zirconia. It is known that the transition temperature falls slightly by the influence of other elements included in impurities or optionally introduced. The transition temperature particularly at falling temperature may be reduced remarkably by adding a stabilizer such as yttrium oxide, calcium oxide, magnesium oxide, titanium oxide or other rare earth oxide to zirconia in a form of solid solution. It is found by measuring the thermal expansion rate that the transition temperature falls to about 650°C. Phase transition can be effected in a short time by annealing the abrasives at a raised temperature much higher than 650°C. But it is not advisable because there is a probability that abrupt expansion occurs in the grain whereby grain fracture is caused. On the contrary, a heat treatment at a temperature much lower than 650°C takes much time and is not suitable for industrial production.

The abrasives of the invention may be used for a lapping abrasive composition by mixing with acidic compounds and water. For example, high grinding efficiency and high processing quality can be obtained by an abrasive composition comprising 5 to 50 wt% of the above abrasives and 0.05 to 20 wt%, preferably 0.1 to 0.3 wt%, of at least one acidic compound advantageously selected from acidic sulfate, acidic nitrate or ammonium chloride as a grinding accelerator. Since alumina-zirconia abrasives have high grinding efficiency, the amount of the grinding accelerator may be reduced compared with a conventional composition. Then the acidity of the composition is low so that grinding machines or jigs do not rust and the hands of an operator are not chapped.

Although the applicants do not wish to be bound by any theory, it appears that the reasons why the above abrasives and abrasive composition are superior in grinding efficiency and processing quality are as follows.

Based upon a study of the phase transition of zirconia, we have provided a super heavy duty abrasive grain comprising alumina-zirconia and titanium oxide in Japanese Patent Publication No. 48-35594 and also provided alumina-zirconia-titania abrasives having yttrium oxide or rare earth minerals containing yttrium oxide added thereto in Japanese Patent Publication No. 2-36152.

The present invention is accomplished by making use of the phase transition of zirconia in a lapping abrasive. Namely, the present invention depends on reducing the grain strength only to a small extent by transforming tetragonal zirconia again to monoclinic zirconia on account of ageing effect by a heat treatment, whereby there are obtained the lapping abrasives which are superior in grinding efficiency and surface roughness of workpieces.

Tetragonal zirconia contained in the alumina-zirconia abrasives is transformed into monoclinic zirconia by the heat treatment and thereby a volume expansion occurs. As a result pores and cracks are reduced and the grain strength is improved. By continuing further the heat treatment, however, the number of micro cracks is increased and the grain strength is reduced. As an intrusive power is rather weaker than a conventional alumina-zirconia abrasive, no scratches, pits or orange peels are caused on a ground surface.

On the other hand the microstructure inherent to the alumina-zirconia abrasives is retained without being destroyed and the cutting edges of fine alumina crystals of 0.1 to 1 μm are also retained. Most of the tetragonal zirconia crystals which are very tough are transformed to monoclinic zirconia crystals and lose toughness so that the self-sharpening property is fully obtained at a grinding load suitable for a lapping process.

It is preferred that starting materials contain as much tetragonal zirconia as possible because the rate of transition to the monoclinic zirconia is increased and thereby a number of micro cracks are expected to yield.

The lapping abrasive composition using the lapping abrasives thus obtained is superior in grinding efficiency and there can be obtained a ground surface having a suitable roughness and free of scratches, pits and oragne peel. The additive amount of acidic compounds needed as grinding accelerator is small, so that grinding machines and jigs do not rust and the hands of an operator are not chapped.

The lapping abrasives can be prepared by fusing, cooling and crushing alumina-zirconia materials in accordance with a normal process and subjecting the crushed materials to a heat treatment at a temperature higher than the transition temperature of zirconia and are easy to produce.

## EXAMPLES

Five kinds of alumina-zirconia abrasives in accordance with the present invention were prepared as follows.

Chemical components are shown in Table 1.

(A) 25 wt% zirconia content

(B) 40 wt% zirconia content

(C) 40 wt% zirconia content and 0.5 wt % yttrium oxide.

(D) 40% wt% zirconia content and 2.0 wt% titanium oxide.

(E) 40 wt% zirconia content and 2.5 wt% total amount of yttrium oxide and titanium oxide.

The abrasive materials were fused in an electric arc furnace and quenched to obtain an ingot. After crushing and classification there were obtained abrasive grains having a grain size of No. 2000 Mesh (average particle size 6.7 μm) and No. 3000 Mesh (average particle size 5.5 μm). The residual amount of tetragonal zirconia was determined by detecting peak integral values of T(111) of tetragonal zirconia, M(111) and M(11$\overline{1}$) of monoclinic zirconia using X-ray powder diffraction apparatus and calculated by the formula,

$$\frac{T(111)}{T(111) + M(111) + M(11\overline{1})}$$

Annealing was carried out in an annealing furnace at 500°C, 650°C, 800°C, 1000°C and 1200°C. Annealing times were one hour, three hours and 10 hours.

Shown in Table 2 is the residual proportion of tetragonal zirconia to zirconia contained in ingots, crushed and classified grains Mesh No. 2000 but not annealed, and annealed grains Mesh No. 2000 respectively.

At such a low annealing temperature as 500°C, the residual amount of tetragonal zirconia with three-hour annealing is almost the same as in the absence of annealing and ten-hour annealing shows only a slight reduction of tetragonal zirconia. At 650°C, near the transition temperature, a reduction of the amount appears at one hour annealing and a remarkable reduction appears at three-hour annealing. The reduction varies little with further annealing. There is not so much difference between 650°C and 800°C or 1000°C. Where the annealing temperature is 1200°C, the grains are fractured remarkably at one hour annealing and they can not be used for abrasive grains.

Abrasive compositions were then prepared by adding water to obtain 20 wt% of abrasive content and adding nickel sulfate as abrasive accelerator at different amounts.

Conventional abrasive compositions were prepared by calcining granular boehmites [Al$_2$O$_3$.H$_2$O or AlO(OH)] at 1150°C for three hours, crushing and classifying them into grains of grain size Mesh no. 2000 (average particle size 6.7 μm) and Mesh no. 3000 (average particle size 5.5 μm), adding water and adding nickel sulfate at different amounts.

Used as a workpiece to be ground was a memory disc containing of an aluminum ring-shape plate having an outer diameter of 130 mm and an electroless nickel-phosphorus (ni-P) plating layer formed on both sides having a thickness of 30 μm. Chemical components of the plating layer are 90 to 92% nickel and 8 to 10% phosphorus.

Said memory disc was mounted on a double-sided lapping machine and polished for ten minutes with suede polishing pads which were placed in relative sliding engagement with the plating layers of the disc. During polishing, the abrasive slurry of the present invention or the prior art was supplied between the disc and polishing pads at a rate of 0.1 1/min. with a lapping load of 50 g/cm². 

After polishing, the lapped surface of the plating layers was inspected to determine whether defects were present. The thickness of the discs was measured to calculate thickness of polished plating layers in order to obtain the stock removal rate. Further the surface roughness was measured to ascertain whether the desired roughness had been obtained.

Table 3 shows the lapping test results. Sample No. 1 using the abrasive aluminum oxide Mesh No. 2000, yields numbers of scratches and orange peels on the electroless Ni-P plating surface. The rate of stock removal is as small as 50 mg.

Samples No. 2 and No. 3, containing nickel sulfate as grinding accelerator, show a little higher stock removal rate. But the surface roughness is almost the same as that of Sample No. 1 whereas the former is indicated to be 95 to 100 when the latter is indicated to be 100 in the form of an index.

Samples No. 4 and No. 5, using the grain size Mesh No. 3000, show a finer surface roughness of 60 to 65, but the stock removal rate is as low as 30 to 60 mg.

In comparative examples, samples No. 17 and No. 18 use non-annealed grains, No. 19 contains no grinding accelerator, and No. 20 employs a lower annealing temperature. Although grinding properties are improved compared to the prior art they are not satisfactory.

Samples Nos. 6 to 16 obtained in accordance with the present invention provide a high quality of grinding surface which is free from scratches and orange peels. The grain size Mesh No. 2000, which has a higher grinding rate than the prior aluminum oxide grains, shows a good surface roughness of 65 to 75 and the stock removal rate is as much as 110 mg. Thus the grinding efficiency is high. The additive amount of nickel sulfate as grinding accelerator is as small as 0.1 to 0.3% so that grinding machinery and jigs do not rust and the hands of an operator are not chapped.

## Table 1

| Abrasive grain | Chemical components (wt%) | | | |
|---|---|---|---|---|
| | $Al_2O_3$ | $ZrO_2$ | $Y_2O_3$ | $TiO_2$ |
| A | 74.2 | 25.2 | trace | 0.03 |
| B | 59.0 | 40.5 | trace | 0.12 |
| C | 58.8 | 40.8 | 0.52 | 0.11 |
| D | 57.5 | 39.0 | trace | 2.15 |
| E | 57.0 | 39.5 | 0.50 | 2.12 |

## Table 2

| Abrasive grains | Ingot | Crushed Classified non-annealing #2000 | Annealed #2000 | | | | | | | |
|---|---|---|---|---|---|---|---|---|---|---|
| | | | 500 °C | | 650 °C | | | 800 °C | 1000 °C | 1200 °C |
| | | | 3hr | 10hr | 1hr | 3hr | 10hr | 3hr | 3hr | 1hr |
| A | 42.5 | 31.2 | 31.1 | 28.0 | 19.0 | 17.5 | 17.3 | 17.4 | 17.0 | 7.2* |
| B | 46.5 | 35.5 | 35.2 | 30.4 | 30.5 | 20.0 | 18.5 | 19.4 | 19.0 | 8.0* |
| C | 78.5 | 45.2 | 43.2 | 40.5 | 38.0 | 22.3 | 21.2 | 21.5 | 21.0 | 9.2* |
| D | 70.6 | 40.2 | 39.5 | 36.5 | 31.5 | 21.3 | 19.2 | 20.0 | 19.3 | 8.2* |
| E | 92.0 | 50.3 | 48.2 | 42.5 | 40.0 | 23.5 | 21.5 | 21.8 | 21.5 | 9.5* |

*Remarkable grain fracture is observed.

Table 3

| | Sample No. | Grain | Heat treatment (°C) hrs. | | Grain size | Grinding accelerator (wt%) | Stock removal rate (mg/10min) | Surface defect | | Surface roughness (R) |
|---|---|---|---|---|---|---|---|---|---|---|
| | | | | | | | | Cratches | Orange peel | |
| Prior Arts | 1 | alumi-num oxide | | | #2000 | 0 | 50 | numerous | numerous | 100 |
| | 2 | | | | #2000 | 1 | 90 | a little | a little | 95 |
| | 3 | | | | #2000 | 10 | 110 | a little | none | 105 |
| | 4 | | | | #3000 | 0 | 30 | numerous | numerous | 65 |
| | 5 | | | | #3000 | 10 | 60 | a little | none | 60 |
| Embodiments | 6 | A | 650 | 3 | #2000 | 1 | 110 | none | none | 75 |
| | 7 | B | 650 | 3 | #2000 | 1 | 120 | none | none | 70 |
| | 8 | C | 650 | 3 | #2000 | 1 | 120 | none | none | 70 |
| | 9 | D | 650 | 3 | #2000 | 1 | 120 | none | none | 70 |
| | 10 | E | 650 | 3 | #2000 | 0.05 | 110 | none | none | 70 |
| | 11 | E | 650 | 3 | #2000 | 0.1 | 130 | none | none | 70 |
| | 12 | E | 650 | 3 | #2000 | 0.3 | 130 | none | none | 65 |
| | 13 | E | 650 | 3 | #2000 | 1 | 120 | none | none | 65 |
| | 14 | E | 650 | 3 | #2000 | 20 | 110 | none | none | 70 |
| | 15 | E | 650 | 3 | #3000 | 1 | 70 | none | none | 60 |
| | 16 | E | 800 | 3 | #2000 | 1 | 120 | none | none | 70 |
| Comparative Examples | 17 | A | untreated | | #2000 | 1 | 80 | a little | a little | 90 |
| | 18 | E | untreated | | #2000 | 1 | 85 | a little | none | 80 |
| | 19 | E | 650 | 3 | #2000 | 0 | 100 | a little | a little | 70 |
| | 20 | E | 500 | 3 | #2000 | 1 | 80 | a little | a little | 75 |

## Claims

1. An alumina-zirconia material suitable for use as a lapping abrasive obtainable by subjecting alumina-zirconia to a heat treatment at a higher temperature than the phase transition temperature of zirconia whereby the proportion of tetragonal zirconia is reduced to at most 30% based on the total zirconia content of the material.

7

2. A material as claimed in claim 1, wherein the zirconia content is in the range of 10 to 60, advantageously in the range of 35 to 50, wt%.

3. A material as claimed in claim 1 or claim 2, wherein at least one oxide selected from the group consisting of yttrium oxide, calcium oxide, magnesium oxide, titanium oxide and other rare earth oxide is contained in the form of solid solution as stabilizer, advantageously in the total amount of 0.05 to 7% by weight of the material.

4. A method for producing a material suitable for use as a lapping abrasive, which comprises subjecting a finely divided alumina-zirconia material to a heat treatment at a temperature higher than the phase transition temperature of zirconia, whereby the proportion of tetragonal zirconia is reduced to at most 30%.

5. A method as claimed in claim 4, wherein the finely divided material is obtained by fusing an alumina-zirconia abrasive material, quenching the fused material to obtain an ingot, and subsequently crushing the ingot.

6. A method for producing alumina-zirconia lapping abrasives as claimed in claim 4 or claim 5, wherein said heat treatment is executed at 650°C ± 50°C for 3 to 10 hours.

7. A neutral or weakly acidic composition comprising a material as defined in any one of claims 1 to 3 or a material obtained by a method as claimed in any one of claims 4 to 6, water and an acidic compound.

8. An abrasive composition as claimed in claim 7, wherein the alumina-zirconia lapping abrasive is present in a proportion of 5 to 50 wt%, and has an average grain size of 0.5 to 50 $\mu$m and a maximum grain size of below 100 $\mu$m.

9. An abrasive composition as claimed in claim 7 or claim 8, wherein said acidic compound is ammonium chloride or an acidic sulfate or nitrate.

10. An abrasive composition as claimed in any one of claims 7 to 9, wherein the concentration of acidic compound is in the range of 0.05 to 20 wt%, advantageously in the range of 0.1 to 0.3 wt%.

11. An alumina-zirconia lapping abrasive in which the tetragonal zirconia constitutes at most 30% of the zirconia content.